# EUROPEAN PATENT SPECIFICATION

(11) **EP 0 518 570 B1**
(45) Date of publication and mention of the grant of the patent: **03.09.1997**
(21) Application number: 92305179.1
(22) Date of filing: 05.06.1992
(51) Int. Cl.: G02B 6/28, G02B 6/34, G02B 6/42

(54) **Optical wavelength-division multiplex modules**
Optische Wellenlängenmultiplexmodule
Modules optiques pour multiplexage à longueur d'onde

(30) Priority: 06.06.1991 JP 134872/91
(43) Date of publication of application: 16.12.1992
(73) Proprietor: FUJITSU LIMITED, Kawasaki-shi, Kanagawa 211 (JP)
(72) Inventor: Arima, Tadao, c/o Fujitsu Limited, Kawasaki-shi, Kanagawa, 211 (JP); Okamura, Koji, c/o Fujitsu Limited, Kawasaki-shi, Kanagawa, 211 (JP)
(74) Representative: Fane, Christopher Robin King

(56) References cited:
- EP-A- 0 256 388
- DE-A- 2 937 580
- US-A- 4 790 614
- PATENT ABSTRACTS OF JAPAN vol. 15, no. 301 (P-1233)31 July 1991 & JP-A-31 07 110
- PATENT ABSTRACTS OF JAPAN vol. 14, no. 565 (P-1143)17 December 1990 & JP-A-22 42 205
- DATABASE WPIL Section Ch, Week 9041, Derwent Publications Ltd., London, GB; Class L03, AN 90-309630 & JP-A-2 220 008

## Description

The present invention relates to optical modules for wavelength-division multiplex optical transmission and to methods of manufacturing such modules.

In recent years, research and development has been carried out with a view to applying optical transmission systems to subscribers systems. What is indispensable in implementing bidirectional optical transmission for subscribers systems using wavelength-division multiplex is an optical module having a multiplexer/demultiplexer function for combining (multiplexing) optical signals of different wavelengths and separating (demultiplexing) signals combined by multiplexing. Establishment of mass production techniques for such optical modules represents one of the keys to successful implementation of an optical transmission system for subscribers systems.

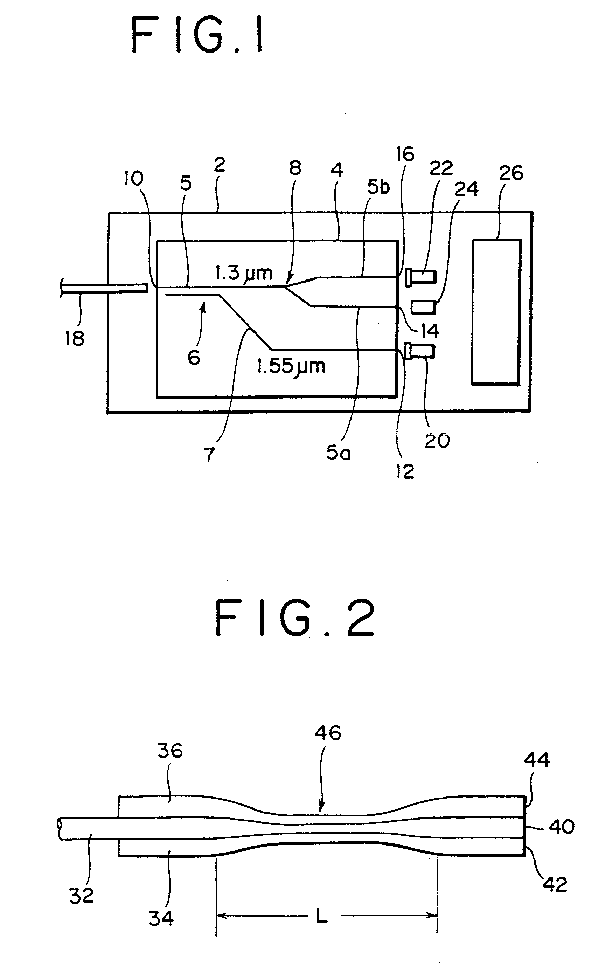

With reference to FIG. 1, an example of the structure of a previously-considered optical module for wavelength-division multiplex optical transmission will be described below. On a substrate 2 for common use for electronic circuits and optical circuits, there is provided an optical waveguide substrate 4. On the optical waveguide substrate 4, there are formed a plurality of optical waveguides 5, 5a, 5b, and 7. The optical waveguide 5 is divided into the optical waveguides 5a and 5b at a Y-branch portion 8. The optical waveguide 5 and optical waveguide 7 are disposed contiguously to each other at a directional optical coupler portion 6 having a demultiplexing function. The optical waveguide 5 has an input port 10 at its left end, while the optical waveguides 7, 5a, and 5b have a first, a second, and a third port 12, 14, and 16 at their right ends, respectively.

An optical signal, which is a wavelength-division multiplexed signal including an optical signal with a wavelength of 1.3 µm and an optical signal with a wavelength of 1.55 µm, is transmitted over an optical fiber 18. When the multiplexed.optical signal is input to the input port 10, it is divided at the directional coupler portion 6 into an optical signal with the wavelength of 1.55 µm and an optical signal with the wavelength of 1.3 µm, of which the optical signal with the wavelength 1.55 µm is propagated through the optical waveguide 7 and output from the first port 12. The optical signal with the wavelength 1.3 µm is divided into two equal divisions at the Y-branch portion 8, which are propagated through the optical waveguides 5a and 5b and output from the second and third ports 14 and 16, respectively. Therefore, by disposing photodetectors opposite the ports 12, 14, and 16, the wavelength-division multiplexed optical signal can be received.

In the FIG. 1 example, to make bidirectional optical transmission possible the first port 12 is connected to a photodetector 20 capable of receiving the optical signal with the wavelength 1.55 µm, the second port 14 is connected to a laser diode 24 outputting an optical signal with the wavelength 1.3 µm, and the third port 16 is connected to a photodetector 22 capable of receiving the optical signal with the wavelength 1.3 µm. Reference numeral 26 is an electronic circuit unit including a driver circuit of the laser diode, amplifiers for the photodetectors, etc.

The optical-waveguide-based optical module for wavelength-division multiplex optical transmission shown in Fig. 1, suffers from a disadvantage in that it is difficult to obtain desired demultiplexing characteristics (wavelength dependence of the branching ratio) in a stabilized manner. Further, since it takes a long time in connecting an optical waveguide with an optical fiber, the module is not suited to mass production. Besides, there is a further disadvantage in that the connection loss between the optical waveguide and optical fiber is great.

DE-A-2937580 discloses a fibre-optical signal transmission device, which may be considered to comprise: a first optical fibre; second and third optical fibres extending alongside and fused laterally to a length of the first optical fibre at a location near one end thereof so as to form a fused portion in which the first optical fibre is sandwiched between the second and third optical fibres, thereby to permit passage of optical signals between the first and second optical fibres and between the first and third optical fibres. This device is not described as having a multiplexing/demultiplexing function, however.

According to a first aspect of the present invention there is provided a fibre-optical signal transmission device, for transmitting wavelength-division multiplex optical signals having respectively a first predetermined wavelength and a second predetermined wavelength less than the said first predetermined wavelength, comprising: a first optical fibre; second and third optical fibres extending alongside and fused laterally to a length of the first optical fibre at a location near one end thereof so as to form a fused portion in which the first optical fibre is sandwiched between the second and third optical fibres, thereby to permit passage of optical signals between the first and second optical fibres and between the first and third optical fibres;
characterised in that: the first optical fibre has a first port at its said one end, the said second optical fibre has a second port at one end thereof that is near the said one end of the said first optical fibre, and the said third optical fibre has a third port at one end thereof that is near the said one end of the said first optical fibre; in cross-section of the fused portion the respective central axes of the three fibres lie substantially on a common linear axis and the fused portion has a first dimension, measured parallel to the said common linear axis, that is greater than a second dimension measured perpendicularly to that axis; and the respective values of the coupling length and of the ratio of the said first dimension to the said second dimension of the fused portion are preselected such that, when a light beam is introduced into the other end of the said first optical fibre and the wavelength of the introduced beam is varied, the resultant light beam emerging from the first port has an intensity maximum at the said first predetermined wavelength and the resultant light beams emerging respectively from the said second and third ports are equal in intensity to one another at the said second predetermined wavelength.

Such a fibre-optical signal transmission device can provide a desired demultiplexing characteristic and can incur a desirably small connection loss between itself and an optical fiber.

According to a second aspect of the present invention, there is provided a method of manufacturing a fibre-optical signal transmission device, for transmitting wavelength-division multiplex optical signals having respectively a first predetermined wavelength and a second predetermined wavelength (λ2) that is smaller than the first predetermined wavelength, comprising the steps of: (a) arranging first, second and third optical fibres so that the second and third optical fibres extend alongside a length of the first optical fibre at a location near one end thereof, the first optical fibre having a first port at its said one end, the said second optical fibre having a second port at one end thereof that is near the said one end of the said first optical fibre, and the said third optical fibre having a third port at one end thereof that is near the said one end of the said first optical fibre; (b) fusing the second and third optical fibres laterally to the said length of the first optical fibre so as to form a fused portion in which the first optical fibre is sandwiched between the second and third optical fibres such that in cross-section the respective central axes of the three fibres lie substantially on a common linear axis, the fused portion having in cross-section a first dimension, measured parallel to the said common linear axis, that is greater than a second dimension measured perpendicularly to that axis;
(c) heating the fused portion so as to adjust the value of the ratio of the said first dimension to the said second dimension of the fused portion; and (d) following step (c), elongating the fused portion, whilst subjecting it to heating at a lower temperature than in step (c), so as to adjust the value of the coupling length of the fused portion whilst leaving the value of the said ratio substantially unchanged; the adjustments of the respective values of the coupling length and the said ratio being performed whilst introducing a light beam of varying wavelength into the other end of the said first optical fibre so as to permit those values to be preselected such that the resultant light beam emerging from the first port has an intensity maximum when the introduced light beam has the said first predetermined wavelength and the resultant light beams emerging respectively from the said second and third ports are equal in intensity to one another when the introduced light beam has the said second predetermined wavelength.

Such a method of manufacturing a fibre-optical signal transmission device can enable a desired demultiplexing characteristic to be easily obtained and can provide a desirably small connection loss between the device and an optical fiber.

The ratio (aspect ratio) of the first (longer) and second (shorter) dimensions of the fused portion determines the wavelength difference between the first predetermined wavelength λ1 (at which the intensity of the light beam output from the first port is maximized) and the second predetermined wavelength λ2 (at which the output light beams from the second and third ports become equal in intensity with each other). On the other hand, the coupling length of the fused portion determines the first predetermined wavelength λ1. Thus, according to the method of the present invention, a desired demultiplexing characteristic can be obtained with ease.

For example, in a preferred embodiment the adjustment of the aspect ratio is performed such that the difference λ1 - λ2 becomes 0.25 µm and the adjustment of the coupling length is performed such that the first wavelength λ1 becomes equal to 1.55µm.

Reference will now be made, by way of example, to the accompanying drawings, in which:
Fig. 1 is a schematic plan view of a previously-considered optical wavelength-division multiplex module;
Fig. 2 is a diagram showing parts of an optical module for wavelength-division multiplex optical transmission embodying the present invention;
Fig. 3 is a diagram for explaining an aspect ratio in the Fig. 2 module;
Fig. 4 is a graph showing relationships between coupling ratios and wavelengths in an optical module embodying the present invention; and
Fig. 5 is a schematic plan view of an optical module embodying the present invention.

Fig. 2 shows parts of an optical module for wavelength-division multiplex optical transmission embodying the present invention. The optical module is produced by first fusing together respective first, second and third optical fibres 32, 34 and 36, each thereof being of an ordinary single mode type in which dispersion becomes zero at the wavelength 1.33 *µ* m, at their side faces with the first optical fiber 32 positioned in the centre, and then elongating the fused portion 46.

The first optical fiber 32 has a first port 40 at its right end, while the second optical fiber 34 and the third optical fiber 36 have a second port 42 and a third port 44 at their right ends, respectively. By using, for example, the first port 40 and the third port 44 as output ports and using the second port 42 as an input port, bidirectional optical transmission can be achieved. Referring to Fig. 2, L denotes the length of the fused portion 46, i.e., the coupling length.

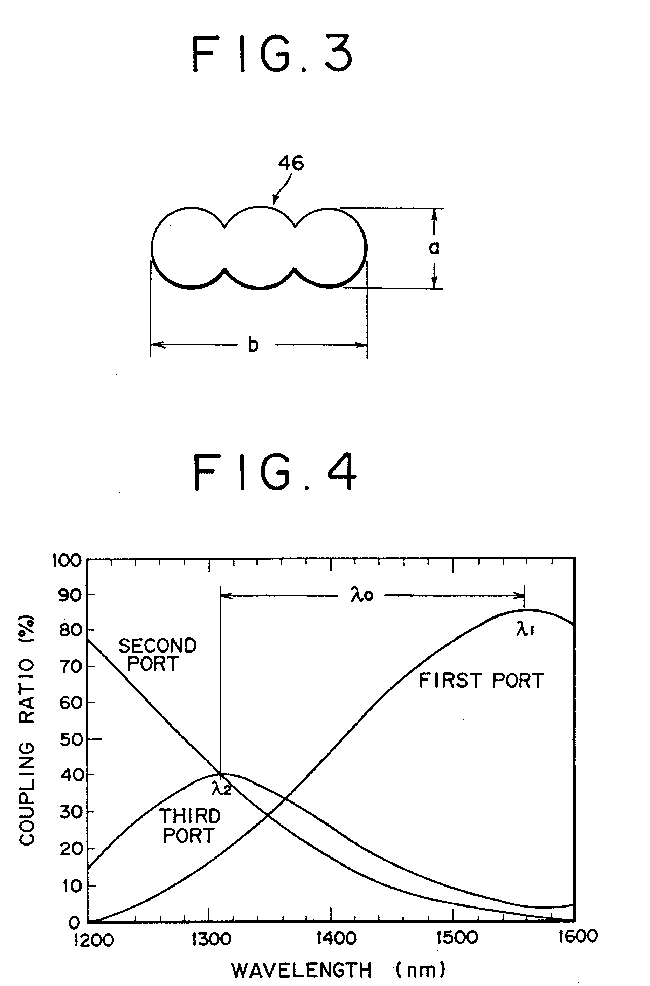

Fig. 3 is an explanatory diagram of the aspect ratio at the fused portion 46. As shown in Fig. 3, in cross-section of the fused portion the respective central axes of the three fibres lie substantially on a common linear axis. The aspect ratio at the fused portion 46 is expressed by the value (b/a) obtained by dividing the longer dimension (first dimension, measured parallel to the common linear axis) b of the cross-section of the fused portion 46 by the shorter dimension (second dimension, measured perpendicularly to the common linear axis) a.

A method of manufacturing the optical module shown in Fig. 2 will be described below. The manufacturing method comprises a first step chiefly of fusing optical fibres together at their side faces and a second step chiefly of elongating the fused portion. In the first step, the fused portion is heated with the portion not elongated or slightly elongated and, in the meantime, the aspect ratio at the fused portion is adjusted. The aspect ratio reduces virtually in proportion to the heating temperature and the heating time. In the second step, the fused portion is elongated to obtain a desired coupling length while the heating temperature is lowered to the point at which the aspect ratio does not change.

FIG. 4 is a graph showing relationships between coupling ratios of the optical module manufactured as described above and wavelengths. Here, the coupling ratios are the ratios, when a light beam is input from the input port at the left end of the first optical fiber 32, of the intensity of the light beams output from the first, second, and third ports 40, 42, and 44 to the intensity of the input light beam. Now we call the wavelength at which the intensity of the light beam output from the first port 40 is maximized the first wavelength λ₁, call the wavelength at which the light beams output from the second port 42 and the third port 44 become equal in intensity with each other the second wavelength λ₂ (< λ₁), and denote the difference between these wavelengths by λ₀ ( = λ₁ - λ₂). Since the difference λ₀ is determined by the aspect ratio at the fused portion, the aspect ratio is adjusted in the first step such that the difference λ₀ becomes 0.25 µm. Further, since the first wavelength λ₁ depends on the coupling length, the coupling length is adjusted in the second step such that the first wavelength λ₁ becomes equal to 1.55 µm.

By adjusting the aspect ratio and the coupling length as described above, a demultiplexing effect to separate light beams with the wavelength 1.55 µm and the wavelength 1.3 µm is produced between the first port 40 and the second and third ports 42 and 44, and a branching effect for the light beam with the wavelength 1.3 µm is produced between the second port 42 and the third port 44.

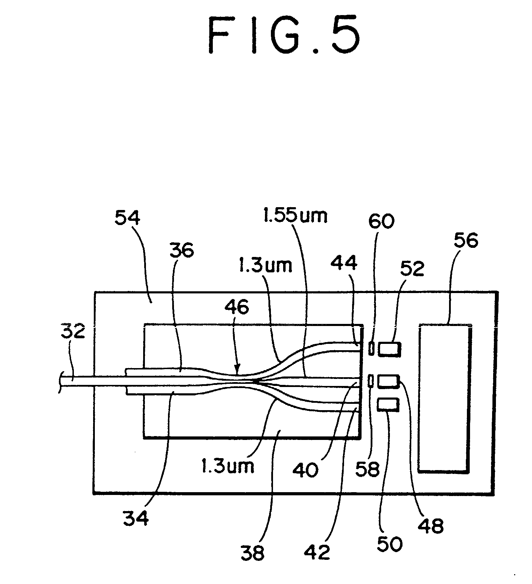

Referring to FIG. 5, there is schematically shown a general-arrangement of the optical module according to an embodiment of the present invention. Component parts substantially equivalent to those in FIG, 2 are denoted by corresponding reference numerals, and duplicate explanation thereof will be omitted. In this embodiment, the fused portion 46 and the ports 40, 42, and 44 of the optical module are fixed on a quartz plate 38 with an adhesive and the quartz plate 38 is fixed on a substrate 54.

Reference numeral 48 denotes a photodetector formed of an avalanche photodiode or the like disposed opposite to the first port 40 for detecting the wavelength 1.55 *µ* m, 50 denotes a light emitting device formed of a laser diode or the like disposed opposite to the second port 42 for emitting a light beam with the wavelength 1.3 *µ* m. Reference numeral 52 denotes a photodetector formed of an avalanche photodiode or the like disposed opposite to the third port 44 for detecting the wavelength 1.3 *µ* m. On the substrate 54, there are mounted an electronic circuit unit 56 including a driver circuit of the light emitting diode 48, amplifier circuits for the photodetectors 50 and 52, and the like.

The first optical fiber 32 is connected to the optical transmission line and optical signals with an optical signal of the wavelength 1.3 *µ* m and an optical signal of the wavelength 1.55 *µ* m multiplexed therein are transmitted over the first optical fiber 32. The optical signal with the wavelength 1.55 *µ* m is output from the first port 40 and converted into an electric signal by the photodetector 48. The optical signal with the wavelength 1.3 *µ* m is output from the third port 44 and converted into an electric signal by the photodetector 52. On the other hand, an optical signal with the wavelength 1.3 *µ* m modulated in accordance with an input signal and output from the light emitting device 50 is input to the second optical fiber 34 through the second port 42, coupled with the first optical fiber 32 at the fused portion 46, and delivered to the optical transmission line connected with the first optical fiber 32. Thus, bidirectional optical transmission can be achieved.

In an embodiment of the present invention, the connection between the optical module and the optical transmission line can be achieved by a connection between optical fibers. Therefore, the loss incurred by the insertion of the optical module is very small. In concrete terms, the insertion loss of the optical module excluding the coupling loss with the light emitting device or photodetector was 1dB at the port for the wavelength 1.55 *µ* m and 4dB at the ports for the wavelength 1.3 *µ* m including the branching loss (3dB). Incidentally, in the case of the example shown in FIG. 1, the insertion loss of the port for the wavelength 1.55 *µ* m was 2dB and that of the ports for the wavelength 1.3 *µ* m was 5dB.

In order to improve the isolation of light beams at the port for light beam reception, it is preferable to insert an optical filter 58 transmitting the light beam with the wavelength 1.55 *µ* m and suppressing the transmission of the light beam with the wavelength 1.3 *µ* m between the first port 40 and the photodetector 48 and to insert an optical filter 60 transmitting the light beam with the wavelength 1.3 *µ* m and suppressing the transmission of the light beam with the wavelength 1.55 *µ* m between the third port 44 and the photodetector 52. By so arranging, an optical module having a high extinction ratio can be provided.

Although, in the above described embodiment, two photodetectors were arranged for detecting an optical signal with the wavelength 1.3 *µ* m and another optical signal with the wavelength 1.55 *µ* m, the arrangement may be modified such that a light emitting device outputting a light beam with the wavelength 1.55 *µ* m is disposed in place of the photodetector 48, and only one optical signal with the wavelength 1.3 *µ* m is received by the reception portion, while a multiplexed signal of an optical signal with the wavelength 1.3 *µ* m and an optical signal with the wavelength 1.55 *µ* m is transmitted from the transmission portion.

## Claims

1. A fibre-optical signal transmission device, for transmitting wavelength-division multiplex optical signals having respectively a first predetermined wavelength (λ1) and a second predetermined wavelength (λ2) less than the said first predetermined wavelength, comprising:
a first optical fibre (32);
second and third optical fibres (34, 36) extending alongside and fused laterally to a length of the first optical fibre (32) at a location near one end thereof so as to form a fused portion (46) in which the first optical fibre is sandwiched between the second and third optical fibres, thereby to permit passage of optical signals between the first and second optical fibres and between the first and third optical fibres;
characterised in that:
the first optical fibre has a first port (40) at its said one end, the said second optical fibre (34) has a second port (42) at one end thereof that is near the said one end of the said first optical fibre, and the said third optical fibre (36) has a third port (44) at one end thereof that is near the said one end of the said first optical fibre;
in cross-section of the fused portion the respective central axes of the three fibres lie substantially on a common linear axis and the fused portion has in cross-section a first dimension (b), measured parallel to the said common linear axis, that is greater than a second dimension (a) measured perpendicularly to that axis; and
the respective values of the coupling length (L) and of the ratio (b/a) of the said first dimension (b) to the said second dimension (a) of the fused portion are preselected such that, when a light beam is introduced into the other end of the said first optical fibre and the wavelength of the introduced beam is varied, the resultant light beam emerging from the first port has an intensity maximum at the said first predetermined wavelength (λ1) and the resultant light beams emerging respectively from the said second and third ports are equal in intensity to one another at the said second predetermined wavelength (λ2).

2. A fiber optical device as claimed in claim 1, wherein the said respective values of the coupling length and the said ratio are preselected such that the said first wavelength (λ1) is 1.55 µm and the said second wavelength (λ2) is 1.3 µm.

3. A fiber optical device as claimed in claim 1 or 2, further comprising:
a first photodetector (48) located in opposition to the said first port (40) and adapted to detect a light beam having the said first wavelength (λ1) ;
a light emitting device (50) located in opposition to the said second port (42) for emitting a light beam having the said second wavelength (λ2) ; and
a second photodetector (52) located in opposition to the said third port (44) and adapted to detect a light beam having the said second wavelength (λ2).

4. A fiber optical device as claimed in claim 3, further comprising a first optical filter (58) disposed between the said first port (40) and the said first photodetector (48) for transmitting a light beam having the said first wavelength (λ1) and suppressing transmission of a light beam having-the said second wavelength (λ2), and a second optical filter (60) disposed between the said third port (44) and the said second photodetector (52) for transmitting a light beam having the said second wavelength (λ2) and suppressing transmission of a light beam having the said first wavelength (λ1).

5. A fiber optical device as claimed in claim 1 or 2, further comprising:
a first light emitting device located in opposition to the said first port (40) for emitting a light beam having the said first wavelength (λ1);
a second light emitting device located in opposition to the said second port (42) for emitting a light beam having the said second wavelength (λ2) ; and
a photodetector located in opposition to the said third port (44) and adapted to detect a light beam having the said second wavelength (λ2).

6. A fiber optical device as claimed in any preceding claim, wherein the said optical fibres (32, 34, 36) are constructed as single-mode fibres of substantially identical cross-sections and transmission characteristics.

7. A method of manufacturing a fibre-optical signal transmission device, for transmitting wavelength-division multiplex optical signals having respectively a first predetermined wavelength (λ1) and a second predetermined wavelength (λ2) that is smaller than the first predetermined wavelength (λ1),
comprising the steps of:
(a) arranging first, second and third optical fibres (32, 34, 36) so that the second and third optical fibres (34, 36) extend alongside a length of the first optical fibre (32) at a location near one end thereof, the first optical fibre having a first port (40) at its said one end, the said second optical fibre (34) having a second port (42) at one end thereof that is near the said one end of the said first optical fibre, and the said third optical fibre (36) having a third port (44) at one end thereof that is near the said one end of the said first optical fibre;
(b) fusing the second and third optical fibres laterally to the said length of the first optical fibre so as to form a fused portion (46) in which the first optical fibre is sandwiched between the second and third optical fibres such that in cross-section the respective central axes of the three fibres lie substantially on a common linear axis, the fused portion having in cross-section a first dimension (b), measured parallel to the said common linear axis, that is greater than a second dimension (a) measured perpendicularly to that axis;
(c) heating the fused portion so as to adjust the value of the ratio (b/a) of the said first dimension (b) to the said second dimension (a) of the fused portion; and
(d) following step (c), elongating the fused portion, whilst subjecting it to heating at a lower temperature than in step (c), so as to adjust the value of the coupling length (L) of the fused portion whilst leaving the value of the said ratio substantially unchanged;
the adjustments of the respective values of the coupling length and the said ratio being performed whilst introducing a light beam of varying wavelength into the other end of the said first optical fibre so as to permit those values to be preselected such that the resultant light beam emerging from the first port has an intensity maximum when the introduced light beam has the said first predetermined wavelength (λ1) and the resultant light beams emerging respectively from the said second and third ports are equal in intensity to one another when the introduced light beam has the said second predetermined wavelength (λ2).

8. A method as claimed in claim 7, wherein the said first predetermined wavelength (λ1) is 1.55µm and the said second predetermined wavelength (λ2) is 1.3µm.

## Patentansprüche

1. Faseroptik-Signalübertragungsvorrichtung zum Übertragen von optischen Wellenlängenmultiplexsignalen, die jeweils eine erste vorbestimmte Wellenlänge (λ1) und eine zweite vorbestimmte Wellenlänge (λ2) besitzen, die kleiner ist als die erste vorbestimmte Wellenlänge, mit
einer ersten optischen Faser (32);
einer zweiten und dritten optischen Faser (34, 36), die sich in Längsrichtung erstrecken und seitlich an einem Längenbereich der ersten optischen Faser (32) an einer Stelle nahe einem Ende derselben angeschmolzen sind, um einen Verschmelzungsabschnitt (46) auszubilden, in welchem die erste optische Faser zwischen der zweiten und der dritten optischen Faser eingefaßt ist, um dadurch den Durchgang von optischen Signalen zwischen der ersten und der zweiten optischen Faser und zwischen der ersten und der dritten optischen Faser zu ermöglichen;
dadurch **gekennzeichnet,** daß:
die erste optische Faser einen ersten Port (40) an ihrem einen Ende aufweist, die zweite optische Faser (34) einen zweiten Port (42) an einem Ende derselben nahe dem genannten einen Ende der ersten optischen Faser aufweist, und die dritte optische Faser (36) einen dritten Port (44) an einem Ende derselben nahe dem genannten einen Ende der ersten optischen Faser aufweist;
im Querschnitt des Verschmelzungsabschnitts die jeweiligen zentralen Achsen der drei Fasern im wesentlichen auf einer gemeinsamen linearen Achse liegen und der Verschmelzungsabschnitt im Querschnitt ein erstes Abmaß (b) besitzt, gemessen parallel zu der gemeinsamen linearen Achse, welches größer ist als ein zweites Abmaß (a), gemessen senkrecht zu dieser Achse; und
die jeweiligen Werte der Kopplungslänge (L) und des Verhältnisses (b/a) der ersten Abmessung (b) zu der zweiten Abmessung (a) des Verschmelzungsabschnitts in solcher Weise vorgewäglt sind, daß dann, wenn ein Lichtstrahl in das andere Ende der ersten optischen Faser eingeführt wird und die Wellenlänge des eingeführten Strahls variiert wird, der resultierende Lichtstrahl, der aus dem ersten Port austritt, ein Intensitätsmaximum bei der genannten ersten vorbestimmten Wellenlänge (λ1) hat und die resultierenden Lichtstrahlen, die aus jeweils dem zweiten und dritten Port austreten, bei der genannten zweiten vorbestimmten Wellenlänge (λ2) in ihrer Intensität einander gleich sind.

2. Faseroptikvorrichtung nach Anspruch 1, bei der die jeweiligen Werte der Kopplungslänge und des genannten Verhältnisses in solcher Weise vorgewählt sind, daß die erste Wellenlänge (λ1) bei 1,55 µm und die genannte zweite Wellenlänge (λ2) bei 1,3 µm liegt.

3. Faseroptikvorrichtung nach Anspruch 1 oder 2, ferner mit
einem ersten Photodetektor (48), der gegenüber dem ersten Port (40) gelegen ist und dafür ausgebildet ist, um einen Lichtstrahl mit der ersten Wellenlänge (λ1) zu detektieren;
einer lichtemittierenden Vorrichtung (50), die gegenüber dem zweiten Port (42) gelegen ist, um einen Lichtstrahl mit der zweiten Wellenlänge (λ2) zu emittieren; und
einem zweiten Photodetektor (52), der gegenüber dem dritten Port (44) gelegen ist und dafür ausgebildet ist, um einen Lichtstrahl mit der zweiten Wellenlänge (λ2) zu detektieren.

4. Faseroptikvorrichtung nach Anspruch 3, ferner mit einem ersten optischen Filter (58), welches zwischen dem ersten Port (40) und dem ersten Photodetektor (48) angeordnet ist, um einen Lichtstrahl mit der ersten Wellenlänge (λ1) zu übertragen und um die Übertragung eines Lichtstrahls mit der zweiten Wellenlänge (λ2) zu unterdrücken, und mit einem zweiten optischen Filter (60), welches zwischen dem dritten Port (44) und dem zweiten Photodetektor (52) angeordnet ist, um einen Lichtstrahl mit der zweiten Wellenlänge (λ2) zu übertragen und um die Übertragung eines Lichtstrahls mit der ersten Wellenlänge (λ1) zu unterdrükken.

5. Faseroptikvorrichtung nach Anspruch 1 oder 2, ferner mit:
einer ersten lichtemittierenden Vorrichtung, die gegenüber dem ersten Port (40) gelegen ist, um einen Lichtstrahl mit der ersten Wellenlänge (λ1) zu emittieren;
einer zweiten lichtemittierenden Vorrichtung, die gegenüber dem zweiten Port (42) gelegen ist, um einen Lichtstrahl mit der zweiten Wellenlänge (λ2) zu emittieren;
einem Photodetektor, der gegenüber dem dritten Port (44) gelegen ist und dafür ausgebildet ist, um einen Lichtstrahl mit der zweiten Wellenlänge (λ2) zu detektieren.

6. Faseroptikvorrichtung nach irgendeinem der vorhergehenden Ansprüche, bei der die optischen Fasern (32, 34, 36) als Einzelmodusfasern ausgebildet sind mit im wesentlichen identischen Querschnitten und Übertragungseigenschaften.

7. Verfahren zur Herstellung einer Faseroptiksignalübertragungsvorrichtung, um optische Wellenlängenmultiplexsignale mit jeweils einer ersten vorbestimmten Wellenlänge (λ1) und einer zweiten vorbestimmten Wellenlänge (λ2), die kleiner ist als die erste vorbestimmte Wellenlänge (λ1) zu übertragen, mit den folgenden Schritten:
(a) Anordnen einer ersten, einer zweiten und einer dritten optischen Faser (32, 34, 36) in solcher Weise, daß die zweite und die dritte optische Faser (34, 36) sich in Längsrichtung entsprechend einer Länge der ersten optischen Faser (32) an einer Stelle nahe einem Ende derselben erstrecken, wobei die erste optische Faser einen ersten Port (40) an ihrem genannten einen Ende besitzt, die zweite optische Faser (34) einen zweiten Port (42) an einem Ende derselben nahe dem genannten einen Ende der ersten optischen Faser besitzt, und die dritte optische Faser (36) einen dritten Port (44) an einem Ende derselben nahe dem genannten einen Ende der ersten optischen Faser besitzt;
(b) Verschmelzen der zweiten und der dritten optischen Faser seitlich mit dem Längenabschnitt der ersten optischen Faser, um dadurch einen Verschmelzungsabschnitt (46) auszubilden, in welchem die erste optische Faser zwischen der zweiten und der dritten optischen Faser in solcher Weise eingefaßt ist, daß im Querschnitt die jeweiligen zentralen Achsen der drei Fasern im wesentlichen auf einer gemeinsamen linearen Achse liegen, wobei der Verschmelzungsabschnitt im Querschnitt eine erste Abmessung (b) besitzt, gemessen parallel zu der gemeinsamen linearen Achse, die größer ist als eine zweite Abmessung (a) gemessen senkrecht zu dieser Achse;
(c) Erhitzen des Verschmelzungsabschnitts, um den Wert des Verhältnisses (b/a) aus der ersten Abmessung (b) zu der zweiten Abmessung (a) des Verschmelzungsabschnittes einzustellen; und
(d) nachfolgend dem Schritt (c), Verlängern des Verschmelzungsabschnitts, während dieser einer Erhitzung auf einer niedrigeren Temperatur als beim Schritt (c) unterworfen wird, um den Wert der Kopplungslänge (L) des Verschmelzungsabschnitts einzustellen, während der Wert des genannten Verhältnisses im wesentlichen unverändert belassen wird;
wobei die Einstellungen der jeweiligen Werte der Kopplungslänge und des genanmten verhältnisses durchgeführt werden, während ein Lichtstrahl mit variierender Wellenlänge in das andere Ende der ersten optischen Faser eingeführt wird, um die Möglichkeit zu schaffen, solche Werte vorzuwählen, derart, daß der resultierende Lichtstrahl, der aus dem ersten Port austritt, ein Intensitätsmaximum besitzt, wenn der eingeführte Lichtstrahl die erste vorbestimmte Wellenlänge (λ1) hat und die resultierenden Lichtstrahlen, die jeweils aus dem zweiten und dem dritten Port austreten, eine untereinander gleiche Intensität haben, wenn der eingeführte Lichtstrahl die zweite vorbestimmte Wellenlänge (λ2) hat.

8. Verfahren nach Anspruch 7, bei dem die erste vorbestimmte Wellenlänge (λ1) bei 1,55 µm liegt und die zweite vorbestimmte Wellenlänge (λ2) bei 1,3 µm liegt.

## Revendications

1. Dispositif de transmission de signaux par fibres optiques, pour transmettre des signaux optiques multiplexés par répartition en longueur d'onde ayant, respectivement, une première longueur d'onde (λ₁) prédéterminée et une seconde longueur d'onde (λ₂) prédéterminée inférieure à ladite première longueur d'onde prédéterminée, comprenant :
une première fibre optique (32) ;
des deuxième et troisième fibres optiques (34, 36) s'étendant le long et fusionnées latéralement avec une certaine longueur de la première fibre optique (32) à un emplacement proche d'une première de ses extrémités de façon à former une partie fusionnée (46) dans laquelle la première fibre optique est prise en sandwich entre les deuxième et troisième fibres optiques, en permettant ainsi le passage de signaux optiques entre les première et deuxième fibres optiques et entre les première et troisième fibres optiques ;
caractérisé :
en ce que la première fibre optique comporte un premier accès (40) à sa dite première extrémité, ladite deuxième fibre optique (34) comporte un deuxième accès (42) à l'une de ses extrémités qui est proche de ladite première extrémité de ladite première fibre optique, et ladite troisième fibre optique (36) comporte un troisième accès (44) à l'une de ses extrémités qui est proche de ladite première extrémité de ladite première fibre optique ;
en ce que, en section transversale de la partie fusionnée, les axes centraux respectifs des trois fibres se trouvent sensiblement sur un axe rectiligne commun et la partie fusionnée a une première dimension (b), mesurée parallèlement audit axe rectiligne commun, qui est plus grande qu'une seconde dimension (a) mesurée perpendiculairement à cet axe ; et
en ce que les valeurs respectives de la longueur de couplage (L) et du rapport (b/a) de ladite première dimension (b) à ladite seconde dimension (a) de la partie fusionnée sont prédéterminées pour que, lorsque l'on introduit un faisceau de lumière dans l'autre extrémité de ladite première fibre optique et que la longueur d'onde du faisceau introduit varie, le faisceau de lumière résultant émergeant du premier accès a, à ladite première longueur d'onde prédéterminée (λ₁), une intensité maximale et les faisceaux de lumière résultants émergeant, respectivement, desdits deuxième et troisième accès ont, à ladite seconde longueur d'onde prédéterminée (λ₂), une intensité égale l'un à l'autre.

2. Dispositif à fibres optiques selon la revendication 1, dans lequel lesdites valeurs respectives de la longueur de couplage et dudit rapport sont choisies préalablement pour que ladite première longueur d'onde (λ₁) soit de 1,55 µm et que ladite deuxième longueur d'onde (λ₂) soit de 1,3 µm.

3. Dispositif à fibres optiques selon la revendication 1 ou 2, comprenant en outre :
un premier photodétecteur (48) situé en face dudit premier accès (40) et apte à détecter un faisceau de lumière ayant ladite première longueur d'onde (λ₁) ;
un dispositif émetteur de lumière (50) situé en face dudit deuxième accès (42) pour émettre un faisceau de lumière ayant ladite seconde longueur d'onde (λ₂) ; et
un second photodétecteur (52) situé en face dudit troisième accès (44) et apte à détecter un faisceau de lumière ayant ladite seconde longueur d'onde (λ₂).

4. Dispositif à fibres optiques selon la revendication 3, comprenant en outre : un premier filtre optique (58), placé entre ledit premier accès (40) et ledit premier photodétecteur (48), pour transmettre un faisceau de lumière ayant ladite première longueur d'onde (λ₁) et pour supprimer la transmission d'un faisceau de lumière ayant ladite seconde longueur d'onde (λ₂) ; et un second filtre optique (60), placé entre ledit troisième accès (44) et ledit second photodétecteur (52), pour transmettre un faisceau de lumière ayant ladite seconde longueur d'onde (λ₂) et pour supprimer la transmission d'un faisceau de lumière ayant ladite première longueur d'onde (λ₁).

5. Dispositif à fibres optiques selon la revendication 1 ou 2, comprenant en outre :
un premier dispositif émetteur de lumière situé en face dudit premier accès (40) pour émettre un faisceau de lumière ayant ladite première longueur d'onde (λ₁) ;
un second premier dispositif émetteur de lumière situé en face dudit deuxième accès (42) pour émettre un faisceau de lumière ayant ladite seconde longueur d'onde (λ₂) ;
un photodétecteur situé en face dudit troisième accès (44) et apte à détecter un faisceau de lumière ayant ladite seconde longueur d'onde (λ₂).

6. Dispositif à fibres optiques selon l'une quelconque des revendications précédentes, dans lequel lesdites fibres optiques (32, 34, 36) sont structurées comme des fibres monomodes de section transversale et de caractéristiques de transmission sensiblement identiques.

7. Procédé de fabrication d'un dispositif de transmission de signaux par fibres optiques, pour transmettre des signaux optiques multiplexés par répartition en longueur d'onde ayant, respectivement, une première longueur d'onde (λ₁) prédéterminée et une seconde longueur d'onde prédéterminée (λ₂) plus petite que ladite première longueur d'onde prédéterminée (λ₁), comprenant les étapes :
(a) d'agencement de première, deuxième et troisième fibres optiques (32, 34, 36) de façon que les deuxième et troisième fibres optiques (34, 36) s'étendent le long d'une certaine longueur de la première fibre optique (32) à un emplacement proche d'une première de ses extrémités, la première fibre optique possédant un premier accès (40), à sa dite première extrémité, ladite deuxième fibre optique (34) possédant un deuxième accès (42), à une première de ses extrémités qui est proche de ladite première extrémité de ladite première fibre optique, et ladite troisième fibre optique (36) possédant un troisième accès (44) à l'une de ses extrémités qui est proche de ladite première extrémité de ladite première fibre optique ;
(b) de fusion des deuxième et troisième fibres optiques, latéralement avec ladite longueur de ladite première fibre optique de façon à former une partie fusionnée (46) dans laquelle la première fibre optique est prise en sandwich entre les deuxième et troisième fibres optiques, de sorte que, en section transversale, les axes centraux respectifs des trois fibres se trouvent sensiblement sur un axe rectiligne commun, la partie fusionnée ayant en section transversale une première dimension (b), mesurée parallèlement audit axe rectiligne commun, qui est plus grande qu'une seconde dimension (a) mesurée perpendiculairement à cet axe ;
(c) de chauffage de la partie fusionnée de façon à ajuster la valeur du rapport (b/a) de ladite première dimension (b) à ladite seconde dimension (a) de la partie fusionnée ; et
(d), à la suite de l'étape (c), d'élongation de la partie fusionnée, tout en la soumettant à un chauffage à une température inférieure à celle de l'étape (c), de façon à ajuster la valeur de la longueur de couplage (L) de la partie fusionnée tout en laissant la valeur dudit rapport sensiblement inchangée ;
les ajustements des valeurs respectives de la longueur de couplage et dudit rapport s'effectuant tout en introduisant un faisceau de lumière de longueur d'onde variable dans l'autre extrémité de ladite première fibre optique de façon à permettre de prédéterminer ces valeurs de façon telle que le faisceau de lumière résultant émergeant du premier accès ait une intensité maximale lorsque le faisceau de lumière introduit a ladite première longueur d'onde (λ₁) prédéterminée et que les faisceaux de lumière résultants émergeant, respectivement, desdits deuxième et troisième accès aient une intensité égale l'un à l'autre lorsque le faisceau de lumière introduit a ladite seconde longueur d'onde (λ₂) prédéterminée.

8. Procédé selon la revendication 7, dans lequel ladite première longueur d'onde (λ₁) prédéterminée est de 1,55 µm et ladite seconde longueur d'onde (λ₂) prédéterminée est de 1,3 µm.
